# EUROPÄISCHE PATENTANMELDUNG

(11) **EP 0 857 930 A1**
(43) Veröffentlichungstag der Anmeldung: **12.08.1998**
(21) Anmeldenummer: 98102291.6
(22) Anmeldetag: 10.02.1998
(51) Int. Cl.: F26B 3/08

(54) **Vorrichtung und Verfahren zum Trocknen von feuchten Feststoffpartikeln in Wirbelschichten**

(30) Priorität: 11.02.1997 DE 19705175
(71) Anmelder: Allgaier-Werke GmbH & Co. KG, 73066 Uhingen (DE)
(72) Erfinder: Trojosky, Mathias, Dr., 73230 Kirchheim u. Teck (DE); Rösner, Otto, 73230 Kirchheim u. Teck (DE)
(74) Vertreter: Haug, Dietmar, Dipl.-Ing.

(57) **Zusammenfassung**

In einem Bereich (A) der Wirbelschicht (30) ist eine Wärmetauscheinrichtung (3) vorgesehen. Der Bereich der Wirbelschicht (30) mit der Wärmetauscheinrichtung (3) ist durch ein Unterlaufwehr (2) von dem Eintragungsbereich (B) abgetrennt.

Die Aufgabe der Erfindung besteht darin, eine hinreichende Vermischung von vorgetrockneten Feststoffpartikeln und neu eingetragenem feuchten Feststoffpartikeln auch bei hohen Eintragungsraten zu schaffen.

Erfindungsgemäß wird dazu ein Teil der in dem mit der Wärmetauscheinrichtung (3) versehenen Bereich (A) der Wirbelschicht vorgetrockneter Feststoffpartikel in dem oberen Bereich der Wirbelschicht (30) über das Unterlaufwehr (2) in den Eintragungsbereich (B) zurückgeführt.

## Beschreibung

Die Erfindung betrifft eine Vorrichtung und ein Verfahren zum Trocknen von feuchten Feststoffpartikeln in Wirbelschichten mit in der Wirbelschicht eingetauchten Wärmetauscheinrichtungen. Insbesondere weisen die Feststoffpartikel körnige Güter auf.

Beim Feststoffeintrag in derartige Wirbelschichten ist darauf zu achten, daß die feuchten Feststoffpartikel nach dem Eintrag in die Wirbelschicht nicht unmittelbar mit den beheizten oder gekühlten Wärmetauscheinrichtungen in Kontakt kommen, da sie zum Anhaften auf den beheizten oder gekühlten Oberflächen der Wärmetauscheinrichtungen neigen. Um dieses Problem zu vermeiden, ist es bekannt, den Bereich der Wirbelschicht, in dem der Feststoffeintrag erfolgt, nicht mit einer Wärmetauscheinrichtung auszustatten. Dadurch können die Feststoffpartikel nach dem Eintrag in die Wirbelschicht in diesem Bereich getrocknet werden und teilweise mit bereits vorgetrockneten Feststoffpartikeln vermischtwerden. Die vorgetrockneten und teilvermischten Feststoffpartikel werden danach durch die normale Feststoffströmung in der Wirbelschicht werdem in nachfolgende Bereiche transportiert, in denen die weiterzubehandelnden Feststoffpartikel in Kontakt mit den Wärmetauscheinrichtungen und dem durch die Wärmetauscheinrichtungen trotz zunehmender Höhe der Wirbelschicht auf nahezu konstante Temperatur gehaltenen Gas kommt, das die Ausbildung der Wirbelschicht bewirkt.

In dem Prospekt "High-Tech-Wirbelschicht-Trockner für die Salz- und Sodaindustrie" der Firma Allgaier vom Oktober 1996 wird ein Wirbelschicht-Trockner mit den Merkmalen gemäß dem Oberbegriff von Anspruch 1 offenbart, der nach dem Verfahren gemäß dem Oberbegriff von Anspruch 12 arbeitet.

In dem bekannten Wirbelschicht-Trockner ist es durch die Integration von Wärmetauscheinrichtungen zum Heizen bzw. Kühlen in der Wirbelschicht gelungen, den ohnehin schon sehr effizienten Wärme- und Stoffaustausch in Wirbelschichten nochmals deutlich zu verbessern. Dadurch ist es möglich, in einer höheren Wirbelschicht kristalline oder granulierte Feststoffpartikel mit wesentlich geringerem Energieaufwand schonend, schnell und besonders wirtschaftlich zu trocknen oder zu kühlen. Dank der in die Wirbelschicht eingetauchten Wärmetauscheinrichtungen können die Wirbelschicht-Trockner mit wesentlich größeren Wirbelschichthöhen betrieben werden. Die Temperatur der Trocknungsluft bleibt über die gesamte Höhe der Wirbelschicht nahezu konstant, so daß mit großen Schichthöhen optimierte Durchsätze möglich sind.

In dem Eintragungsbereich für die feuchten Feststoffpartikel ist eine Wärmetauscheinrichtung bewußt weggelassen worden, um ein Anhaften an den beheizten oder gekühlten Oberflächen der Wärmetauscheinrichtung zu vermeiden. Infolgedessen werden die feuchten Feststoffpartikel im Eintragungsbereich nur wenig getrocknet. Deshalb können sich die feuchten Feststoffpartikel nur mit diesen wenig getrockneten Feststoffpartikeln vermischen.

Außerdem besteht bei konzentriertem Eintrag sehr feuchter Feststoffpartikel die Gefahr, daß diese wegen der schlechteren Fluidisierbarkeit gegenüber bereits vorgetrockneten Feststoffpartikeln auf den Gasverteilerboden gelangen und diesen zusetzen. Um eine ausreichende Vermischung zwischen den eingetragenen feuchten Feststoffpartikeln und den bereits getrockneten oder vorgetrockneten Feststoffpartikeln sicherzustellen, ist deshalb eine verhältnismäßig niedrige Feststoffeintragungsrate erforderlich. Die Feststoffpartikel müssen verhältnismäßig lange in dem Eintragungsbereich verweilen, bis sie hinreichend mit bereits genügend getrockneten Feststoffpartikeln vermischt sind, um in den mit einer Wärmetauscheinrichtung versehenen Bereich der Wirbelschicht transportiert werden zu können, ohne in einem nennenswerten Maß an den Oberflächen der Wärmetauscheinrichtung anzuhaften.

Der Erfindung liegt die Aufgabe zugrunde, den bekannten Wirbelschicht-Trockner weiter zu verbessern und insbesondere die Aufgabe, selbst bei einer hohen Eintragungsrate an feuchten Feststoffpartikeln eine gute Vermischung zwischen feuchtem und bereits vorgetrocknetem Feststoffpartikeln zu bewirken, ohne daß eine Wärmetauscheinrichtung im Eintragungsbereich notwendig ist.

Damit soll es ermöglicht werden, auch sehr feuchte und zur Verklebung neigende Feststoffpartikel direkt in Wirbelschicht-Trocknern ohne ein Anhaften feuchter Feststoffpartikel an in die Wirbelschicht eingetauchte Wärmetauscheinrichtungen eintragen zu können.

Weiterhin soll verhindert werden, daß sehr feuchte Feststoffpartikel wegen der schlechteren Fluidisierbarkeit auf den perforierten Gasverteilerboden der Wirbelschicht gelangt und diesen zusetzt oder verklebt.

Die Aufgabe der Erfindung wird mit einer Vorrichtung gemäß den Merkmalen von Anspruch 1 bzw. einem Verfahren gemäß den Merkmalen von Anspruch 12 gelöst. Vorteilhafte Ausgestaltungen der Erfindung sind in den jeweils abhängigen Ansprüchen angegeben.

Erfindungsgemäß wird ein Teil der Feststoffpartikel, die aus dem Eintragungsbereich in den mit einer Wärmetauscheinrichtung versehenen Bereich der Wirbelschicht gelangt sind und dort intensiver als in dem Eintragungsbereich wärmebehandelt wurden, in den Eintragungsbereich zurückgeführt, um sich dort mit frisch eingetragenen Feststoffpartikeln zu vermischen.

Vorzugsweise geschieht die Rückführung der wärmebehandelten Feststoffpartikel in den Eintragungsbereich in dem oberen Bereich der Wirbelschicht. Die Rückführung kann in diesem Bereich vorzugsweise dadurch erreicht werden, daß die Trennwand, die als Unterlaufwehr für die Feststoffpartikel ausgeführt ist und ein vorzeitiges Überströmen der feuchten Feststoffpartikel in den mit den Wärmetauscheinrichtungen ausgestatteten Bereich der Wirbelschicht verhindert, nicht nur im bodennahen Bereich der Wirbelschicht, sondern auch im oberen Bereich der Wirbelschicht eine Feststoffströmung in den benachbarten Bereich ermöglicht.

Vorzugsweise wird ein weiterer Bereich der Wirbelschicht zwischen dem Austrittsbereich der Feststoffpartikel und dem Eintragungsbereich mit einer Wärmetauscheinrichtung versehen und durch eine weitere Trennwand von dem Eintragungsbereich getrennt.

Vorzugsweise ist nur die Trennwand zwischen dem mit einer Wärmetauscheinrichtung versehenen Bereich und dem Eintragungsbereich niedriger als die Oberfläche der Wirbelschicht, während die Trennwand des weiteren mit Wärmetauscheinrichtungen versehenen Wirbelschichtbereichs, der den Eintragungsbereich mit der Austragungseinrichtung verbindet, aus der Oberfläche der Wirbelschicht herausragt.

Vorzugsweise ist der Gasverteilerboden derart ausgeführt, daß am Boden der Wirbelschicht im Eintragungsbereich eine Gasströmung in Richtung des Wirbelschichtbereichs erzeugt wird, der mit einer Wärmetauscheinrichtung versehen, aber nicht mit der Austragungseinrichtung verbunden ist.

Der Transport eines Teils der Feststoffpartikel in den mit einer Wärmetauscheinrichtung versehenen Wirbelschichtbereich kann durch die Verwendung mechanisch wirkender Einrichtungen wie z.B. Förderschnecken unterstützt oder ganz durch diese bewirkt werden. Dieser Feststoffpartikelanteil strömt in dem mit einer Wärmetauscheinrichtung versehenen Wirbelschichtbereich bevorzugt nach oben und wird in stärkerem Maße als Feststoffpartikel getrocknet, die in dem Eintragungsbereich verbleiben, der keine Wärmetauscheinrichtung aufweist. Die derart getrockneten Feststoffpartikel strömen im oberen Bereich der Wirbelschicht wieder in den Eintragungsbereich zurück. Durch die damit erreichte Feststoffpartikelströmung wird eine gute Vermischung von (insbesondere kontinuierlich) frisch eingetragenen feuchten Feststoffpartikeln mit den aus dem mit einer Wärmetauscheinrichtung versehenen Wirbelschichtbereich zurückströmenden und dort getrockneten Feststoffpartikeln erreicht.

Die Vermischung der beiden Feststoffpartikelströme führt zu einer Absenkung des relativen Feuchtegehaltes der Feststoffpartikel in dem Eintragungsbereich und beugt somit den Gefahren des Anhaftens übermäßig feuchter Feststoffpartikel an den eingetauchten Wärmetauscheinrichtungen sowie am Gasverteilerboden auch bei einer hohen Eintragungsrate feuchter Feststoffpartikel vor.

Ein dem eingetragenen Feststoffpartikelstrom entsprechender Massenstrom aus vorgetrockneten und gemischten Feststoffpartikeln strömt unter dem Unterlaufwehr in den bezüglich dem Eintragungsbereich stromabwärts gelegenen Wirbelschichtbereich und wird dort einer weiteren Behandlung durch Trocknung und/oder Kühlung unterzogen.

Die in die fluidisierte Schicht eingetauchten Wärmetauscheinrichtungen sollten in einer geeigneten Form für einen guten Wärmeübergang bei gleichzeitiger guter Feststofffluidisierung ausgeführt sein. Beispielsweise können die in die fluidisierte Wirbelschicht eingetauchten Wärmetauscheinrichtungen beheizte oder gekühlte Rohrbündel, Platten oder Stäbe sein. Vorzugsweise sind die Platten vertikal und die Rohrbündel vertikal oder horizontal angeordnet.

Bevorzugte Einsatzgebiete der Erfindung sind die Trocknung von Salzen und die Trocknung von Klärschlammgranulaten insbesondere bei besonders hohen Feststoffpartikeldurchsätzen.

Im folgenden wird die Erfindung beispielhaft anhand der Figuren beschrieben.
- Figur 1: zeigt einen Querschnitt eines bevorzugten Ausführungsbeispiels der erfindungsgemäßen Vorrichtung zum Trocknen von Feststoffpartikeln.
- Figur 2: zeigt einen Querschnitt eines weiteren Ausführungsbeispiels der erfindungsgemäßen Vorrichtung zum Trocknen von Feststoffpartikeln.

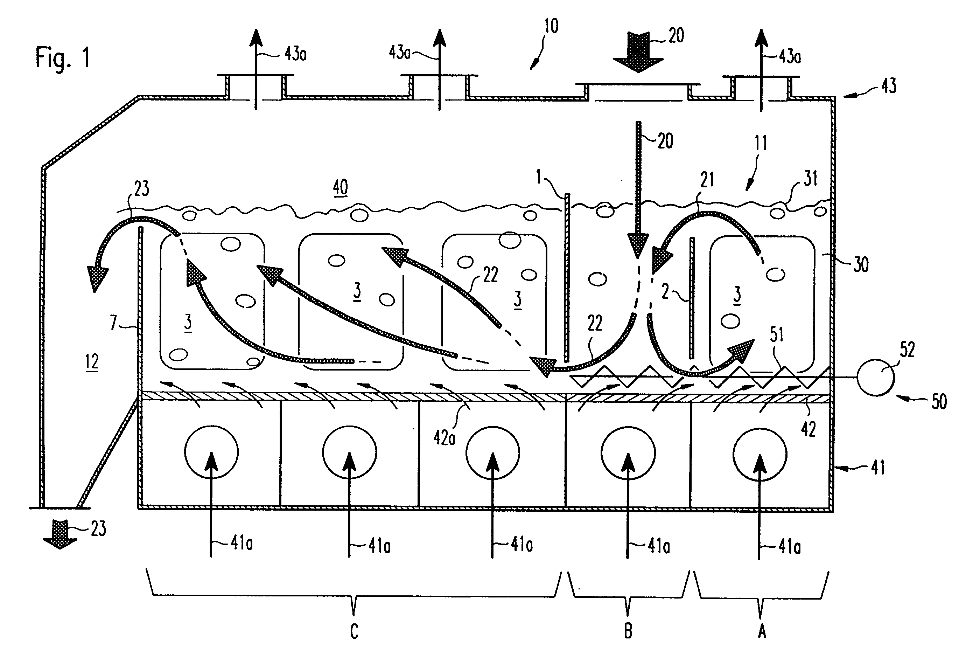

Der Wirbelschicht-Trockner 10 in Figur 1 weist eine Einrichtung 40 zur Fluidisierung von Feststoffpartikeln in einer Wirbelschicht 30 mit einer Zulufteinrichtung 41, einem Gasverteilerboden 42 und einer Ablufteinrichtung 43 auf. Zur Ausbildung einer Wirbelschicht 30 aus fluidisiertem Feststoffpartikeln mit einer Oberfläche 31 oberhalb des Gasverteilerbodens 42 wird in dem Wirbelschicht-Trockner 10 eine Gas- oder Luftströmung von der Zulufteinrichtung 41 (Pfeile 41a) durch den Gasverteilerboden 42 (Pfeile 42a) zu der Ablufteinrichtung 43 (Pfeile 43a) geleitet. Die Gas- oder Luftströmung dient auch zur Wärmeübertragung auf den fluidisierten Feststoffpartikeln. Bei hinreichend starker Gasströmung wird die Oberfläche 31 der Wirbelschicht 30 durch die Höhe der Trennwand 7 zu der Austragungseinrichtung 12 bestimmt. In der Wirbelschicht 30 sind Wärmetauscheinrichtungen 3 eingetaucht, die die Temperatur der Gas- oder Luftströmung über die gesamte Höhe der Wirbelschicht nahezu konstant halten. Dadurch kann eine optimierte Trocknung oder Kühlung auf einem deutlich niedrigerem Temperaturniveau der Gas- oder Luftstömung erreicht werden.

Die Wärmetauscheinrichtungen 3 sind in den Bereichen C und A der Wirbelschicht vorgesehen. Zwischen den Bereichen C und A mit den integrierten Wärmetauscheinrichtungen ist der Eintragungsbereich B für Feststoffpartikel vorgesehen. Er ist durch Trennwände 1 und 2 von den mit den Wärmetauscheinrichtungen versehenen Bereichen C bzw. A abgetrennt. Die Trennwände 1 und 2 sind als Unterlaufwehre ausgebildet, die eine Strömung von Feststoffpartikeln zwischen dem unteren Rand der Trennwand und dem Gasverteilerboden in die benachbarten Bereiche der Wirbelschicht gestatten, aber ein vorzeitiges Überströmen der feuchten Feststoffpartikel in die mit Wärmetauscheinrichtungen versehenen Bereiche der Wirbelschicht verhindern. Die Trennwand 1 zwischen dem Eintragungsbereich B und dem Bereich C ragt aus der Oberfläche 31 der Wirbelschicht 30 heraus, so daß auch eine Strömung in der oberen Schicht der Wirbelschicht unterbunden ist. Die Trennwand 2 zwischen dem Eintragungsbereich B und dem Bereich A ist vollständig in die Wirbelschicht 30 eingetaucht, so daß eine Strömung in der oberen Schicht der Wirbelschicht zwischen dem Bereich A und dem Eintragungsbereich B möglich ist. Zusammen mit dem mit einer Wärmetauscheinrichtung 3 versehenen Bereich A der Wirbelschicht 30 und der durch den Gasverteilerboden 42 verursachten Strömung stellt die vollständig eingetauchte als Unterlaufwehr ausgebildete Trennwand 2 eine Einrichtung 11 zur Rückführung eines Teils der in dem mit einer Wärmetauscheinrichtung 3 versehenen Bereich A der Wirbelschicht 30 getrockneten Feststoffpartikel in den Eintragungsbereich B zur Verfügung.

Die gemäß der Pfeile 20 eingetragenen Feststoffpartikel werden zum Teil durch die durch die Gasströmung 42a aus dem Gasverteilerboden 42 bewirkte Strömung in der Wirbelschicht entlang den Pfeilen 22 in Richtung der Austragungseinrichtung 12 geführt und dort gemäß dem Pfeil 23 ausgetragen. Ein Teil der eingetragenen Feststoffpartikel gelangt in den Bereich A der Wirbelschicht 30, wo die Feststoffpartikel durch Kontakt mit der von der Wärmetauscheinrichtung 3 erwärmten Gas- oder Luftströmung und der Wärmetauscheinrichtung 3 getrocknet werden. Die im Bereich A getrockneten Feststoffpartikel werden oberhalb der Trennwand 2, die nicht über die Oberfläche 31 der Wirbelschicht 30 ragt, entlang Pfeil 21 zurück in den Eintragungsbereich B geführt. In dem Eintragungsbereich B vermischen sich die vorgetrockneten Feststoffpartikel mit den frisch eingetragenen feuchten Feststoffpartikeln. Der Transport eines Teils der feuchten Feststoffpartikel aus dem Eintragungsbereich B in den mit einer Wärmetauscheinrichtung versehenen Bereich A der Wirbelschicht 30 kann auch teilweise oder vollständig mit einer Einrichtung 50 zum zwangsweisen Fördern von Feststoffpartikeln, z.B. einer von einem Motor 52 angetriebenen Förderschnecke 51, bewirkt werden.

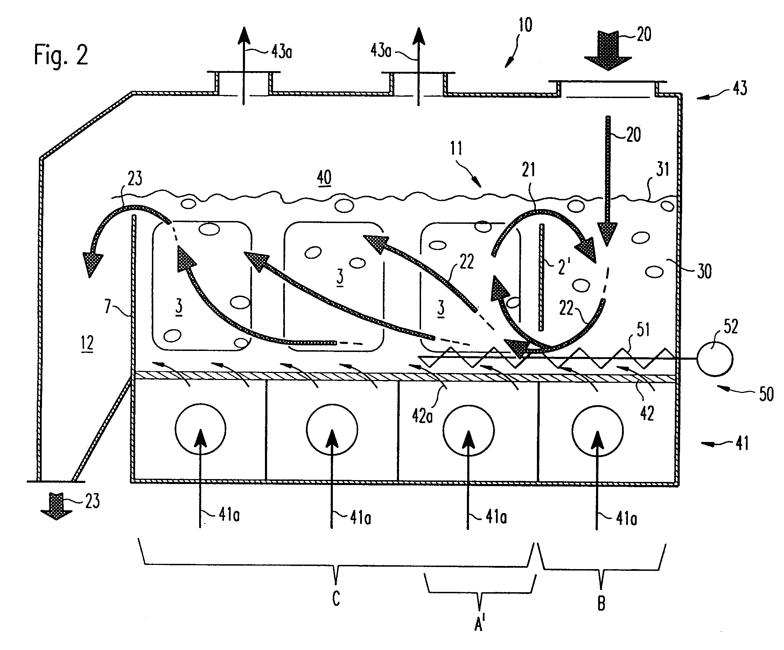

Das in Figur 2 gezeigte weitere Ausführungsbeispiel stimmt mit dem in Figur 1 gezeigten Ausführungsbeispiel in großen Teilen überein. Zur Erläuterung der übereinstimmenden Teile wird auf die Beschreibung von Figur 1 verwiesen. Das Ausführungsbeispiel von Figur 2 unterscheidet sich von dem Ausführungsbeispiel von Figur 1 im wesentlichen dadurch, daß auf den mit einer Wärmetauscheinrichtung 3 versehenen Bereich A der Wirbelschicht 30 und die Trennwand 2 zwischen dem Eintragungsbereich B und dem Bereich A verzichtet wurde und der Wirbelschicht-Trockner 10 entsprechend kleiner ausgeführt ist. Anstelle der Trennwand 1 des Ausführungsbeispiels von Figur 1 weist das Ausführungsbeispiel von Figur 2 eine Trennwand 2' zwischen dem Eintragungsbereich und dem mit einer Wärmetauscheinrichtung 3 versehenen Bereich C der Wirbelschicht 30 auf, die der Trennwand 2 des Ausführungsbeispiels von Figur 1 entspricht. Die Trennwand 2' zwischen dem Eintragungsbereich B und dem Bereich C ist vollständig in die Wirbelschicht 30 eingetaucht, so daß eine Strömung in der oberen Schicht der Wirbelschicht zwischen dem Bereich C und dem Eintragungsbereich B möglich ist. Dadurch übernimmt der an den Eintragungsbereich B angrenzende Bereich A', der sozusagen ein Teilbereich des Bereichs C ist, die Funktion des Bereichs A von Figur 1. Weiterhin unterscheidet sich das Ausführungsbeispiel von Figur 2 von dem Ausführungsbeispiel von Figur 1 dahingehend, daß die Strömung 42a aus dem Gasverteilerboden 42 in dem Eintragungsbereich B und die Förderschnecke 51 einen Feststoffpartikeltransport unterhalb der Trennwand 2' in Richtung des Bereichs C, d.h. in eine zu dem Ausführungsbeispiel von Figur 1 entgegengesetzte Richtung, bewirken.

Somit betrifft die Erfindung eine Vorrichtung und ein Verfahren zum Trocknen von Feststoffpartikeln, die in einer Wirbelschicht fluidisiert werden. In einem Bereich A der Wirbelschicht 30 ist eine Wärmetauscheinrichtung 3 vorgesehen. Der Bereich der Wirbelschicht 30 mit der Wärmetauscheinrichtung 3 ist durch ein Unterlaufwehr 2 von dem Eintragungsbereich B abgetrennt.

Die Aufgabe der Erfindung besteht darin, eine hinreichende Vermischung von vorgetrockneten Feststoffpartikeln und neu eingetragenem feuchten Feststoffpartikeln auch bei hohen Eintragungsraten zu schaffen.

Erfindungsgemäß wird dazu ein Teil der in dem mit der Wärmetauscheinrichtung 3 versehenen Bereich A der Wirbelschicht vorgetrockneten Feststoffpartikel in dem oberen Bereich der Wirbelschicht 30 über das Unterlaufwehr 2 in den Eintragungsbereich B zurückgeführt.

Gemäß verschiedener Ausführungsbeispiele der Erfindung werden im Bereich A, A' vorgetrocknete Feststoffpartikel zu den im Eintragungsbereich B mit höherer Feuchte eingetragenen Feststoffpartikeln zugemischt. Dadurch wird die Feuchte der Mischung herabgesetzt. Die Rückmischung erfolgt durch Zirkulation von Feststoffpartikeln, die durch einen Gasverteilerboden 42 mit annähernd horizontal gerichteter Luftströmung und/oder einer mechanischen Vorrichtung 52, z.B. eine Schnecke, sowie durch Überströmen eines in der Schicht der Feststoffpartikel eingetauchten Trennwertes 2, 2' bewirkt wird. Dadurch wird die Feuchte der Mischung von Feststoffpartikeln im Eintragungsbereich B herabgesetzt. Dies hat zur Folge, daß sich die Feststoffpartikel besser bzw. überhaupt fluidisieren lassen, sowie aufgrund der geringeren Mischfeuchte weniger oder überhaupt nicht an die inneren Teilen der Vorrichtung 10 anhaften.

Bei diesen Ausführungsbeispielen werden feuchte Feststoffpartikel zum Zwecke ihrer Trocknung im Eintragungsbereich B eingefüllt und getrocknet über die Austragungseinrichtung 12 abgezogen.

Die Ausführungsbeispiele weisen ein Fließbett für die Trocknung von Feststoffpartikeln mit einem Eintragungsbereich B, einem in die Schicht der Fließbettpartikel eingetauchten Unterlaufwehr 2, 2' und einem mit einer Wärmetauschereinrichtung versehenen Bereich A, A' auf. Ein Gasverteilerboden 42 zur Erzeugung einer gerichteten, annähernd horizontalen Gasströmung und/oder eine mechanische Vorrichtung 52, z.B. eine Schnecke, sind vorgesehen, um damit eine Zirkulation der Feststoffpartikel zu erzielen.

Das Verfahren bzw. die Vorrichtung zum Trocknen von Feststoffpartikeln ist durch eine Einrichtung 11 zum Rückmischen der in dem mit einer Wärmetauschereinrichtung 3 versehenen Bereich A, A' der Wirbelschicht 30 vorgetrockneten Feststoffpartikeln in den Eintragungsbereich B zum Zweck der Herabsetzung der Feuchte der in den Eintragungsbereich B eingetragenen Feststoffpartikel und dadurch einer besseren Fluidisierung im Eintragungsbereich B sowie einer Verringerung von Anhaftungen von feuchten Feststoffpartikeln gekennzeichnet. Die Rückmischung durch Zirkulation kann durch die konstruktive Gestaltung des Gasverteilerbodens 42, der eine annähernd horizontale Luftströmung bewirkt, und/oder eine mechanische Vorrichtung 52, z.B. eine Schnecke, sowie durch Überströmen eines in der Schicht der Feststoffpartikel eingetauchten Trennwehres 2, 2' erzielt werden.

## Patentansprüche

1. Vorrichtung (10) zum Trocknen von Feststoffpartikeln mit
- einer Einrichtung (40) zur Fluidisierung der Feststoffpartikel in einer Wirbelschicht (30),
- einem Eintragungsbereich (B) für Feststoffpartikel,
- einer Austragungseinrichtung (12) für die getrockneten Feststoffpartikel,
- einem mit einer Wärmetauscheinrichtung (3) versehenen Bereich (A, A') der Wirbelschicht (30), und
- einem Unterlaufwehr (2, 2'), das den Eintragungsbereich (B) von dem mit einer Wärmetauscheinrichtung (3) versehenen Bereich (A, A') der Wirbelschicht (30) trennt,
**gekennzeichnet durch** eine Einrichtung (11) zur Rückführung eines Teils der in dem mit einer Wärmetauscheinrichtung (3) versehenen Bereich (A, A') der Wirbelschicht (30) vorgetrockneten Feststoffpartikel in den Eintragungsbereich (B).

2. Vorrichtung nach einem der vorhergehenden Ansprüche, dadurch gekennzeichnet, daß der obere Rand des Unterlaufwehrs (2, 2') unterhalb der Oberfläche (31) der Wirbelschicht (30) angeordnet ist.

3. Vorrichtung nach einem der vorhergehenden Ansprüche, gekennzeichnet durch einen weiteren mit einer Wärmetauscheinrichtung (3) versehenenen Bereich (C) der Wirbelschicht (30), der zwischen der Austragungseinrichtung (12) und dem Eintragungsbereich (B) angeordnet ist und durch ein weiteres Unterlaufwehr (1) von dem Eintragungsbereich (B) getrennt ist.

4. Vorrichtung nach Anspruch 3, dadurch gekennzeichnet, daß der Bereich (A) von dem weiteren Bereich (C) durch den Eintragungsbereich (B) getrennt ist.

5. Vorrichtung nach Anspruch 3 oder 4, dadurch gekennzeichnet, daß der obere Rand des weiteren Unterlaufwehrs (1), das den Eintragungsbereich (B) von dem weiteren Bereich (C) trennt, oberhalb der Oberfläche (31) der Wirbelschicht (30) angeordnet ist.

6. Vorrichtung nach einem der vorhergehenden Ansprüche, dadurch gekennzeichnet, daß die Höhe oder Höhen des oder der Unterlaufwehre (1, 2, 2') verstellbar sind.

7. Vorrichtung nach einem der vorhergehenden Ansprüche, dadurch gekennzeichnet, daß der oder die Abstände zwischen dem oder den unteren Rändern des oder der Unterlaufwehre (1, 2, 2') und dem Boden der Wirbelschicht (30) verstellbar sind.

8. Vorrichtung nach einem der vorhergehenden Ansprüche, dadurch gekennzeichnet, daß die Einrichtung (40) zur Fluidisierung der Feststoffpartikel in einer Wirbelschicht (30) eine Zulufteinrichtung (41), einen Gasverteilerboden (42) und eine Ablufteinrichtung (43) aufweist.

9. Vorrichtung nach einem Anspruch 8, dadurch gekennzeichnet, daß der Gasverteilerboden (42) eine Feststoffpartikelströmung aus dem Eintragungsbereich (B) unter dem Unterlaufwehr (2, 2') in den mit einer Wärmetauscheinrichtung (3) versehenen Bereich (A, A') der Wirbelschicht (30) bewirkt.

10. Vorrichtung nach einem der vorhergehenden Ansprüche, gekennzeichnet durch eine Einrichtung (50) zum zwangsweisen Fördern von Feststoffpartikeln aus dem Eintragungsbereich (B) in den mit einer Wärmetauscheinrichtung (3) versehenen Bereich (A, A') der Wirbelschicht (30).

11. Vorrichtung nach Anspruch 10, dadurch gekennzeichnet, daß die Einrichtung (50) zum zwangsweisen Fördern von Feststoffpartikeln eine Förderschnecke (51) mit einem Antrieb (52) aufweist.

12. Verfahren zum Trocknen von Feststoffpartikeln mit folgenden Schritten:
(a) Eintragen von Feststoffpartikeln in einen Eintragungsbereich (B),
(b) Ausbilden einer Wirbelschicht (30) zur Fluidisierung der Feststoffpartikel,
(c) Fördern von Feststoffpartikeln unter einem Unterlaufwehr (2, 2') in einen mit einer Wärmetauscheinrichtung (3) versehenen Bereich (A, A') der Wirbelschicht (30), der durch das Unterlaufwehr (2, 2') von dem Eintragungsbereich (B) getrennt ist,
(d) Trocknen der Feststoffpartikel in der Wirbelschicht, und
(e) Austragen der wärmebehandelten Feststoffpartikel mittels einer Austragungseinrichtung (12),
**dadurch gekennzeichnet**, daß
(c') ein Teil der in dem mit einer Wärmetauscheinrichtung(3) versehenen Bereich (A, A') der Wirbelschicht (30) vorgetrockneten Feststoffpartikel in den Eintragungsbereich (B) rückgeführt wird, um sich mit den eingetragenen Feststoffpartikeln zu vermischen.

13. Verfahren nach Anspruch 12, dadurch gekennzeichnet, daß ein Teil der Feststoffpartikel aus dem mit dem Wärmetauscheinrichtung (3) versehenen Bereich (A, A') über das Unterlaufwehr (2, 2') an der Oberfläche der Wirbelschicht (30) in den Eintragungsbereich (B) rückgeführt wird.

14. Verfahren nach Anspruch 12 oder 13, dadurch gekennzeichnet, daß
(c1) ein Teil der Feststoffpartikel aus dem Eintragungsbereich (B) unter dem Unterlaufwehr (2, 2') in dem mit einer Wärmetauscheinrichtung (3) versehenen Bereich (A, A') der Wirbelschicht (30) gefördert wird, und
(c2) ein Teil der Feststoffpartikel aus dem Eintragungsbereich (B) unter einem weiteren Unterlaufwehr (1) in einen weiteren mit einer Wärmetauscheinrichtung (3) versehenen Bereich (C) der Wirbelschicht (30) gefördert wird, der zwischen dem Eintragungsbereich (B) und der Austragungseinrichtung (12) angeordnet und durch ein weiteres Unterlaufwehr (1) von dem Eintragungsbereich (B) getrennt ist.

15. Verfahren nach einem Anspruch 14, dadurch gekennzeichnet, daß ein Feststoffpartikelstrom zwischen dem Eintragungsbereich (B) und dem weiteren Bereich (C) an der Oberfläche der Wirbelschicht (30) durch das Unterlaufwehr (1) verhindert wird.

16. Verfahren nach einem der Ansprüche 12 bis 15, dadurch gekennzeichnet, daß die Höhe oder Höhen des oder der Unterlaufwehre (1, 2, 2') verstellbar ist bzw. sind.

17. Verfahren nach einem der Ansprüche 12 bis 16, dadurch gekennzeichnet, daß der Abstand zwischen dem oder den unteren Rändern des oder der Unterlaufwehre (1, 2, 2') und dem Boden der Wirbelschicht (30) verstellbar ist.

18. Verfahren nach einem der Ansprüche 12 bis 17, dadurch gekennzeichnet, daß die Wirbelschicht (30) zur Fluidisierung der Feststoffpartikel durch im Kreuzgegenstrom durch die fluidisierten Feststoffpartikel strömenden Gase (42a) ausgebildet wird.

19. Verfahren nach Anspruch 18, dadurch gekennzeichet, daß der Feststoffpartikelstrom von aus dem Eintragungsbereich (B) unter dem Unterlaufwehr (1, 2, 2') in den mit einer Wärmetauscheinrichtung (3) versehenen Bereich (A, A', C) der Wirbelschicht (30) durch die im Kreuzgegenstrom strömenden Gase (42a) zur Ausbildung der Wirbelschicht bewirkt wird.

20. Verfahren nach einem der Ansprüche 12 bis 19, dadurch gekennzeichnet, daß ein Teil der Feststoffpartikel aus dem Eintragungsbereich (B) in den mit einer Wärmetauscheinrichtung (3) versehenen Bereich (A, A') der Wirbelschicht durch eine mechanische Fördereinrichtung (50) gefördert wird.
